# EUROPEAN PATENT APPLICATION

(11) **EP 2 226 226 A2**
(43) Date of publication of application: **08.09.2010**
(21) Application number: 09015698.5
(22) Date of filing: 18.12.2009
(51) Int. Cl.: B60T 13/58, B60T 17/22

(54) **Braking method combining electrodynamic brakes with mechanical brakes in case of emergency braking**

(30) Priority: 19.12.2008 EP 08022157
(71) Applicant: Bombardier Transportation GmbH, 10785 Berlin (DE)
(72) Inventor: Plamper, Stefan, 13467 Berlin (DE); Laden, Karl, 60200 Compiègne (FR)
(74) Representative: Novagraaf Technologies

(57) **Abstract**

The invention relates to a very simple method of controlling emergency braking of a rail vehicle comprising at least one motor axle provided with motor axle friction brake means and a reversible electric rotating machine and one trailer axle provided with trailer axle friction brake means, the method comprising the following steps:
- applying a constant dynamic brake force to the motor axle with the reversible electric rotating machine,
- applying a complementary friction brake force to the motor axle with the motor axle friction brake means,
- applying an emergency braking force to the trailer axle with the trailer axle friction brake means, such that the sum of the constant dynamic brake force and the complementary friction brake force equals the emergency braking force.

## Description

### TECHNICAL FIELD OF THE INVENTION

The present invention relates to a method of combining dynamic brakes and mechanic brakes in case of emergency braking.

### BACKGROUND ART

Conventionally, rail vehicles are provided with several different braking means, such as mechanical or dynamical braking means. These different braking means are applied for different braking functions, mainly for service braking and for emergency braking.

In case of service braking, the mechanical and dynamical braking means are combined. More precisely, the dynamical braking means are preferably used as far as possible and the missing braking forces are supplemented by the mechanical braking means. Such a combination of mechanical and dynamical braking means is helping to minimize wear and to optimize energy regeneration.

However, in case of emergency braking, the use of dynamical braking means is more complex: indeed, in case of emergency braking, all the axles of the rail vehicle must be provided with the same or similar adhesion conditions. But generally a rail vehicle is provided both with trailer and motorized axles and only the motorized axles are provided with dynamical braking means. Hence, it is very difficult to obtain the same or similar adhesion conditions with the dynamical braking means and the mechanical braking means, and especially due to the variations of the dynamical braking means performances according to the rail vehicle speed.

Consequently, a large majority of rail vehicles only uses mechanical brakes in case of emergency braking. This leads to situations where the installed mechanical braking means are oversized and not used very often.

In order to avoid these situations, some methods that combine mechanical and dynamical braking means in case of emergency braking have been proposed. For example, DE102006011963 discloses a control algorithm enabling to combine mechanical and dynamical braking means in specific situations. However, the algorithm is very complex and very difficult to carry out.

### SUMMARY OF THE INVENTION

One object of the invention is to propose a simple method of combining mechanical and dynamical braking means assuring an equal adhesion between motorized and trailer axles in all load and speed conditions.

More precisely, and according to a first aspect of the present invention, a method of controlling emergency braking of a rail vehicle is provided, the rail vehicle comprising at least one motor axle provided with motor axle friction brake means and a reversible electric rotating machine and one trailer axle provided with trailer axle friction brake means, the method comprising the following steps:
- applying a constant dynamic brake force to the motor axle with the reversible electric rotating machine,
- applying a complementary friction brake force to the motor axle with the motor axle friction brake means,
- applying an emergency braking force to the trailer axle with the trailer axle friction brake means, such that the sum of the constant dynamic brake force and the complementary friction brake force equals the emergency braking force.

The method is based on a very efficient, albeit simple, rule: in order to achieve the same adhesion between purely mechanically braked axles and mechanically and electrically brakes ones, a constant dynamic brake force is applied to the motor axle with the reversible electric rotating machine. This dynamic brake force is constant over the complete speed range of the rail vehicle, above a predetermined speed value which corresponds to the speed at which the reversible electric rotating machine is not effective as brake anymore. The missing braking forces are supplemented by the mechanical braking means applying a complementary friction brake force to the motor axle with the motor axle friction brake means. At the same time, an emergency braking force equal to the sum of the constant dynamic brake force and the complementary friction brake force is applied to the trailer axle, so that the same braking force is applied to the motor axle and to the trailer axle, assuming the same or similar axle load on the motor and trailer axles. This method is very simple since the same dynamic brake force and the same complementary friction brake force are always applied to the motor axle, for a given load, over the complete speed range. Consequently, there is no need for predetermining the forces to be applied by each type of brake as a function of the speed of the vehicle.

According to a preferred embodiment, the method further comprises a preliminary step of determining the emergency braking force corresponding to the force to be applied to each of the trailer axle and motor axle in case of emergency so that all the forces to be applied are predetermined whatever the rail vehicle speed.

Preferably, the emergency braking force is determined as a function of a measured axle load so that it is possible to adapt the braking force according the axle load. This embodiment increases the safety in case of emergency braking.

According to different embodiments of the invention:
- the constant dynamic braking force is the same under all load conditions, which further simplifies the method. In this case, the force applied by the reversible rotating machine in case of emergency braking is always the same, under all speed and load conditions and the missing forces are supplemented by the motor axle friction brake means. Consequently, in this embodiment, the constant dynamic braking force is the same under all load conditions whereas the complementary friction brake force is a function of the axle load;
- the constant dynamic brake force is determined as a function of the measured axle load in order to optimize energy regeneration and to optimize the reversible electric rotating machine braking capability.

Preferably, the constant dynamic brake force is equal to or less than a pretermined maximum dynamic force.

More preferably, the predetermined maximum dynamic force is equal to or less than the brake that the reversible electric rotating machine is able to apply to the motor axle at the maximum speed of the rail vehicle. Usually, the braking curve of the reversible rotating machine is a function of the speed of the vehicle: the reversible rotating machine presents a constant braking force below a speed point of the rail vehicle and a decreasing braking force above this speed point. Consequently, the constant dynamic brake force is chosen equal to or less than the force applied by the reversible electric rotating machine to the motor axle at the maximum speed of the rail vehicle such that the reversible rotating machine is always able to apply this force, whatever the speed of the rail vehicle.

According to a preferred embodiment of the invention, the method further comprises a step of measuring the rail vehicle speed and setting the constant dynamic brake force to zero if the rail vehicle speed is below a predetermined threshold value. As a matter of fact, when the speed of the rail vehicle is very low, the reversible rotating machine is no longer efficient as brake. In this case, the motor axle friction brake means are the only brakes used for all the axles.

Actually the method according to the invention could be summarized as follows:
- determining if the rail vehicle speed is below or above a predetermined threshold;
- if the rail vehicle speed is above a predetermined threshold value:
   - applying a constant dynamic brake force to the motor axle with the reversible electric rotating machine,
   - applying the complementary friction brake force to the motor axle with the motor axle friction brake means,
   - applying an emergency braking force to the trailer axle with the trailer axle friction brake means, such that the sum of the constant dynamic brake force and the complementary friction brake force equals the emergency braking force,
- if the rail vehicle speed is below the predetermined threshold value:
   - applying the complementary friction brake force to the motor axle with the motor axle friction brake means,
   - applying the emergency braking force to the trailer axle with the trailer axle friction brake means,

The speed threshold referred to above corresponds to a very low speed, at which the reversible electric machine is not effective as brake anymore. Typically, this threshold is below 10 km/h and in most cases below 5 km/h. At speeds below this threshold, the difference in braking force between the trailer and motor axles does not affect the behaviour of the rail vehicle and becomes irrelevant.

Preferably, the constant dynamic force is the same under all load conditions, whereas the complementary friction brake force varies with the load conditions in order to increase the emergency braking force with the axle load.

Preferably, the complementary friction brake force is the same over the complete speed range, even below the predetermined threshold, in order to simplify the method.

According to different embodiments of the present invention:
- the motor axle friction brake means consist of mechanical brakes;
- the mechanical brakes comprise at least one pneumatic means;
- the reversible electric rotating machine consists of a dynamic brakes.

### BRIEF DESCRIPTION OF THE DRAWINGS

Other advantages and features of the invention will become more apparent from the following description of specific embodiments of the invention given as non-restrictive examples only and represented in the accompanying drawings in which:
- Figure 1 is a schematic view of a wheelset comprising two trailer axles, each trailer axle being provided with two mechanical brakes;
- Figure 2 is a schematic view of a wheelset comprising two motor axles, each motor axle being provided with one electrodynamic and one mechanical brake;
- Figure 3 is a graphic illustrating the brake force of the electrodynamic brake of the wheelset represented on figure 2 according to the speed of the rail vehicle in which this wheelset is arranged;
- Figure 4 is a graphic showing the brake force contribution of the different braking means of figures 1 and 2 as a function of the speed of the rail vehicle in which they are mounted;
- Figure 5 is a graphic showing the load compensation of mechanical brakes in the motor and trailer axles.

### DETAILED DESCRIPTION OF PREFERRED EMBODIMENTS

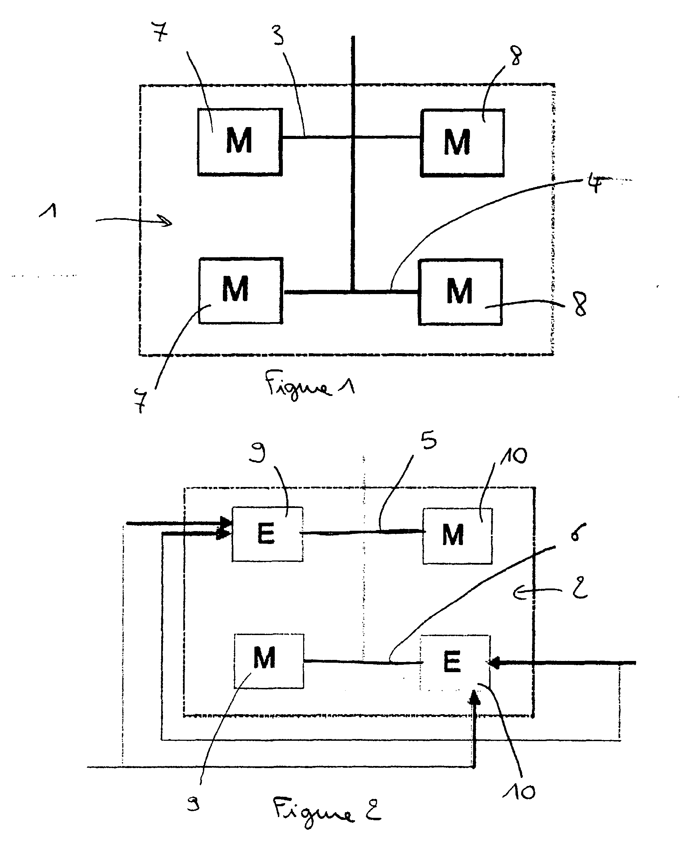

In this embodiment, the method is applied to a rail vehicle comprising at least one wheelset 1 according to figure 1 and at least one wheelset 2 according to figure 2.

The wheelset 1 of figure 1 comprises two trailer axles 3, 4, whereas the wheelset of figure 2 comprises two motor axles 5, 6. The trailer axles 3, 4 are each provided with two trailer axle friction brake means 7, 8, whereas the motor axles are each provided with one reversible electric rotating machine 9 and one motor axle friction brake means 10. The trailer axle friction brake means 7, 8 and the motor axle friction brake means 10 are mechanical braking means, such as pneumatic brakes, whereas the reversible electric rotating machine 9 is an electric motor that can also be used as electrodynamic brake, hence the qualifier "reversible".

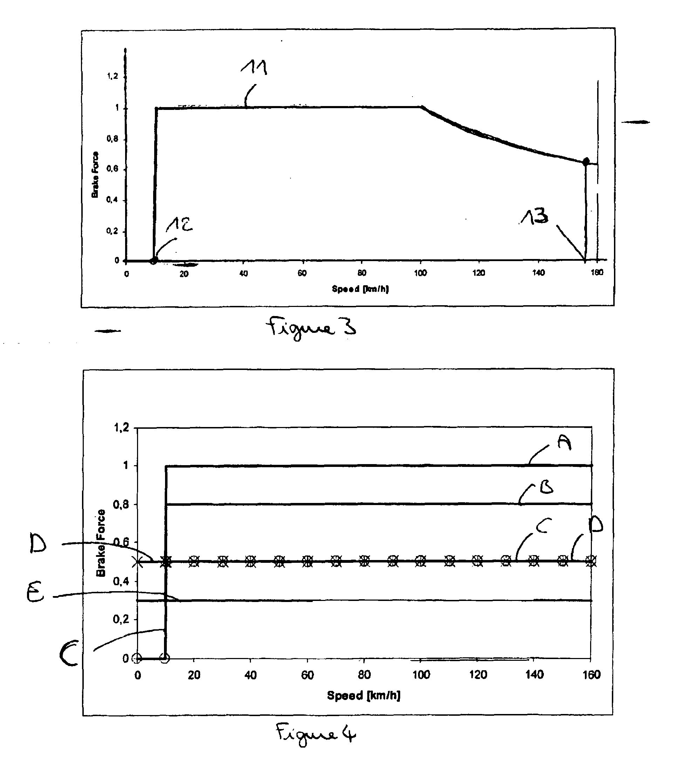

Each reversible electric rotating machine 9 has a brake force capability varying as a function of the speed of the rail vehicle as represented on figure 3. More precisely, the brake force capability 11 of the reversible electric rotating machine is equal to zero when the rail vehicle speed is below a first predetermined threshold value 12. In this example the first predetermined threshold value 12 is equal to 10 km/h. When the rail vehicle speed is above this first threshold value 12 but below a second threshold value 13 in the range of 100 to 120 km/h, the brake force capability 11 of the reversible electric rotating machine is constant and equal to 1. When the rail vehicle speed is above the second threshold value 13, the brake force capability 11 of the reversible electric rotating machine decreases with the rail vehicle speed. Consequently, in order to choose a constant dynamic brake force 14 that the reversible electric rotating machine is always able to apply, it is best to choose the brake force 14 that the reversible electric rotating machine exerts when the rail vehicle is at its maximum speed. In this example, the constant dynamic brake force 14 applied by the reversible electric rotating machine is equal to 0,5, under all load conditions, and over the following speed range: from 10 km/h to the maximum speed of the rail vehicle.

The method according to the invention will be described in more details.

In a first example, under a first load condition, the emergency braking force to be applied is equal to 1.

If the rail vehicle must stop while its speed is below the first threshold value 12, the complete emergency braking force is applied by the mechanical braking means, i.e. by the trailer axle friction brake means 7, 8 for the trailer axle and by the motor axle friction brake means 10 for the motor axles.

If the rail vehicle must stop while its speed is above the first threshold value 12, each reversible electric rotating machine 9 applies on each motor axle 5, 6 a force equal to the constant dynamic brake force 14. The missing braking forces for each motor axle are supplemented by the motor axle friction brake means 10, which consequently applies a force equal to 0,5.

Preferably, the friction brake means always apply the same force and consequently, over the complete speed range, the force applied by the motor axle friction brake means 10 is equal to 0,5, even when the rail vehicle speed is below the first threshold value 12.

in the same time, the trailer axle friction brake means 7, 8 apply on the trailer axle 3 an emergency braking force equal to the sum of the constant dynamic brake force and the complementary friction brake force, over the complete speed range.

In a second example, under a second load condition, the emergency braking force to be applied is equal to 0,8.

lf the rail vehicle must stop and its speed is below the first threshold value 12, the complete emergency braking force is applied by the mechanical braking means, i.e. by the trailer axle friction brake means 7, 8 for the trailer axle and by the motor axle friction brake means 10 for the motor axles.

If the rail vehicle must stop whereas its speed is above the first threshold value 12, each reversible electric rotating machine 9 applies on each motor axle 5, 6 a force equal to the constant dynamic brake force 14. This constant dynamic brake force 14 is equal to 0,5. The missing braking forces for each motor axle are supplemented by the motor axle friction brake means 10, which consequently applies a force equal to 0,3.

Preferably, the friction brake means always apply the same force and consequently, over the complete speed range, the force applied by the motor axle friction brake means 10 is equal to 0,3, even when the rail vehicle speed is below the first threshold value 12.

In the same time, the trailer axle friction brake means 7, 8 apply on the trailer axle 3 a force equal to the sum of the constant dynamic brake force and the complementary friction brake force.

With this method, equal adhesion in emergency brake mode can be achieved by blending the mechanical brake with electrodynamic brake using a very simple control strategy. Moreover, constant braking force reference value for electrodynamic brake helps to keep the control algorithms for the electrodynamic brake simple.

Figure 4 summarizes the force applied to a motor axle according to the rail vehicle speed in the first and second load conditions.

Curve A represents the emergency braking force applied to the motor axle under the first load condition, whereas curve B represents the emergency braking force applied to the motor axle under the second load condition. Curve A is the sum of :
- the force applied by the reversible electric rotating machine, represented by curve C, and
- the force applied by the motor axle friction brake means, represented by curve D.

The emergency braking force applied to the trailer axle under the first load condition is also represented by curve A.

Curve B is the sum of :
- the force applied by the reversible electric rotating machine, represented by curve C since this force is always the same, and
- the force applied by the motor axle friction brake means, represented by curve E.

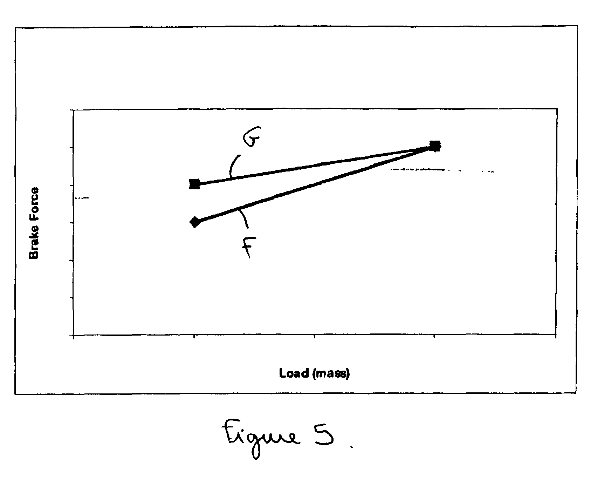

Figure 5 represents the mechanical brake force evolution according to the axle load. Curve F represents the mechanical brake force evolution applied by the motor axle friction brake means on the motor axle according to the axle load, whereas curve G represents the mechanical brake force evolution applied by the trailer axle friction brake means on the trailer axle according to the axle load. The force applied by the friction brake means increases with the axle load. However, the force applied by the motor axle friction brake means is inferior to the force applied by trailer axle friction brake means. The method enables then to reduce the motor axle friction brake means size.

This method has several other advantages. Firstly it reduces the number of mechanical brake actuators on motorized wheelsets. Moreover, the conventional pneumatic brake control for mechanical brakes can be used without requiring electronics for control of the emergency brake. Besides, the mechanical brake can be controlled in emergency brake mode in the same way as on conventional vehicles, as a fixed predefined pressure adjusted according to load weighing. This method enables also to reduce the complexity of the control for the electrodynamic brake.

Operating the stopping brake function exclusively by the mechanical brake helps to fulfil the requirement of traction inhibition during braking, e. g. the electrical brake does not need to perform a holding brake function on uphill track which would require positive torque. Moreover, no electrical stopping is needed.

The invention is not limited to the embodiment shown in the accompanying drawings.

## Claims

1. A method of controlling emergency braking of a rail vehicle comprising at least one motor axle provided with motor axle friction brake means and a reversible electric rotating machine and one trailer axle provided with trailer axle friction brake means, the method comprising the following steps:
- applying a constant dynamic brake force to the motor axle with the reversible electric rotating machine,
- applying a complementary friction brake force to the motor axle with the motor axle friction brake means,
- applying an emergency braking force to the trailer axle with the trailer axle friction brake means, such that the sum of the constant dynamic brake force and the complementary friction brake force equals the emergency braking force.

2. The method of claim 1, further comprising a preliminary step of determining the emergency braking force corresponding to the force to be applied to each of the trailer axle and motor axle in case of emergency.

3. The method of any one the preceding claims, wherein the complementary friction brake force on the motor axle is determined as a function of a measured axle load.

4. The method of any one of the preceding claims, wherein the constant dynamic brake force is determined as a function of the measured axle load.

5. The method of any one of the preceding claims, wherein the constant dynamic brake force is less than a predetermined maximum dynamic force.

6. The method of claim 5, wherein the predetermined maximum dynamic force is equal to or less than the force applied by the reversible electric rotating machine to the motor axle at the maximum speed of the rail vehicle.

7. The method of any one of the preceding claims, further comprising measuring the rail vehicle speed and setting the constant dynamic brake force to zero if the rail vehicle speed is below a predetermined threshold value.

8. The method of any one of the preceding claims, wherein the motor axle friction brake means consist of mechanical brakes.

9. The method of the preceding claim, wherein the mechanical brakes comprises of at least one pneumatic means.

10. The method of any one of the preceding claims, wherein the reversible electric rotating machine comprises an electric motor that can be used as electrodynamic brake.

11. The method of any one of the preceding claims, further comprising a preliminary step of comparing the vehicle speed to a speed threshold, wherein the subsequent steps are carried out only if the vehicle speed is above the speed threshold.

12. A method of controlling emergency braking of a rail vehicle comprising at least one motor axle provided with motor axle friction brake means and a reversible electric rotating machine and one trailer axle provided with trailer axle friction brake means, the method comprising the following steps:
- determining if the rail vehicle speed is below or above a predetermined threshold;
- if the rail vehicle speed is above a predetermined threshold value:
- applying a constant dynamic brake force to the motor axle with the reversible electric rotating machine,
- applying the complementary friction brake force to the motor axle with the motor axle friction brake means,
- applying an emergency braking force to the trailer axle with the trailer axle friction brake means, such that the sum of the constant dynamic brake force and the complementary friction brake force equals the emergency braking force,
- if the rail vehicle speed is below the predetermined threshold value:
- applying the complementary friction brake force to the motor axle with the motor axle friction brake means,
- applying the emergency braking force to the trailer axle with the trailer axle friction brake means.
